# EUROPEAN PATENT APPLICATION

(11) **EP 4 730 094 A1**
(43) Date of publication of application: **22.04.2026**
(21) Application number: 24843411.0
(22) Date of filing: 10.07.2024
(51) Int. Cl.: G06F 3/04842, G06F 3/04845, G09G 3/22

(54) **ELECTRONIC DEVICE, AND METHOD FOR MANAGING POP-UP WINDOW BY USING SAME**

(30) Priority: 20.07.2023 KR 20230094762; 30.08.2023 KR 20230114609
(71) Applicant: Samsung Electronics Co., Ltd., Suwon-si, Gyeonggi-do 16677 (KR)
(72) Inventor: JWA, Yeonjoo, Suwon-si, Gyeonggi-do 16677 (KR); YANG, Minho, Suwon-si, Gyeonggi-do 16677 (KR); LIM, Eunsil, Suwon-si, Gyeonggi-do 16677 (KR)
(74) Representative: HGF
(86) International application number: PCT/KR2024/009888
(87) International publication number: WO 2025/018693

(57) **Abstract**

According to an embodiment, an electronic device may comprise: a display; a memory that stores instructions; and a processor operatively connected to the display and the memory. The instructions may, when executed by the processor, cause the electronic device to: in response to a first interaction input for a first pop-up window, acquire first coordinate information of the first pop-up window; in response to termination of the first interaction input, determine a first edge line of the first pop-up window as a first reference line; on the basis of the first reference line, and a first point at which the first interaction input is terminated, display a first display object corresponding to the first pop-up window; and in response to a second interaction input for the first display object, display the first pop-up window corresponding to the first display object on the basis of the first coordinate information. Other various embodiments may be possible.

## Description

### [Technical Field]

Embodiments of the disclosure relate to an electronic device and a method of managing a pop-up window using the same.

### [Background Art]

With the development of digital technology, various types of electronic devices, such as a mobile communication terminal, a personal digital assistant (PDA), an electronic notebook, a smartphone, a tablet personal computer (PC), and a wearable device, are being widely used. To support and enhance the functionality of these electronic devices, hardware and/or software of the electronic device are continuously being improved.

The electronic device is designed to be portable, and may provide a user interface (UI) that allows a user to conveniently utilize various functions, while transitioning between a plurality of programs. For example, the electronic device may display a plurality of pop-up windows (e.g., multi-window) through a display, and may implement a user interface for performing a plurality of tasks according to the plurality of pop-up windows.

If a user inputs an instruction to execute a first application, the electronic device may display an execution screen of the first application in the form of a pop-up window. The electronic device may display the pop-up window to at least partially overlap a background image, through a display.

The above-described information may be provided as the related art to help understanding of the disclosure. No claim or determination is made as to whether any of the above-described contents is applicable as the prior art related to the disclosure.

### [Disclosure of Invention]

### [Technical Problem]

When an electronic device displays a user interface in the form of a pop-up window through a display of a limited size, the electronic device may provide a method of reducing, moving, and restoring the pop-up window such that a user may easily perform other tasks.

According to an embodiment, an electronic device may detect a first interaction input for a pop-up window, and in response to detection of the first interaction input, convert the pop-up window to a display object of a preset size and display the same. The electronic device may generate and display a plurality of display objects based on a plurality of pop-up windows. The electronic device may detect a second interaction input for a display object, in response to detection of the second interaction input, restore the display object to the pop-up window, and display the restored pop-up window based on a location of the pop-up window at which the first interaction input is detected. When operating a plurality of application programs, user convenience may be improved.

Technical subjects to be accomplished herein are not limited to the above-described technical subjects, and still other technical subjects not described may be clearly understood by one of ordinary skill in the art to which the present invention pertains from the following description.

### [Solution to Problem]

According to an embodiment, an electronic device may include a display, a memory configured to store instructions, and a processor operatively connected to the display and the memory. The instructions, when executed by the processor, cause the electronic device to, in response to a first interaction input for a first pop-up window, acquire first coordinate information of the first pop-up window, in response to termination of the first interaction input, determine a first edge line of the first pop-up window as a first reference line, based on the first reference line and a first point at which the first interaction input is terminated, display a first display object corresponding to the first pop-up window, and in response to a second interaction input for the first display object, display the first pop-up window corresponding to the first display object based on the first coordinate information.

According to an embodiment, a method of managing a pop-up window may include in response to a first interaction input for a first pop-up window, acquiring first coordinate information of the first pop-up window; in response to termination of the first interaction input, determining a first edge line of the first pop-up window as a first reference line; based on the first reference line and a first point at which the first interaction input is terminated, displaying a first display object corresponding to the first pop-up window; and in response to a second interaction input for the first display object, displaying the first pop-up window corresponding to the first display object based on the first coordinate information.

According to an embodiment, a non-transitory computer-readable storage medium (or, computer program product) storing one or more programs may be described. According to an embodiment, one or more programs may include instructions that, when executed by a processor of an electronic device, perform in response to a first interaction input for a first pop-up window, acquiring first coordinate information of the first pop-up window; in response to termination of the first interaction input, determining a first edge line of the first pop-up window as a first reference line; based on the first reference line and a first point at which the first interaction input is terminated, displaying a first display object corresponding to the first pop-up window; and in response to a second interaction input for the first display object, displaying the first pop-up window corresponding to the first display object based on the first coordinate information.

### [Advantageous Effects of Invention]

According to an embodiment, an electronic device may display an execution screen of a specific application program based on a pop-up window, and may in response to a first interaction input for the pop-up window, convert the pop-up window to a display object and display the same. In response to a second interaction input for the display object, the electronic device may restore the display object to the pop-up window and display the same. The electronic device may improve user convenience in a use environment for the pop-up window.

According to an embodiment, although a pop-up window is converted to a display object, an electronic device may maintain an execution state and an activation state of an application program corresponding to the pop-up window and the display object. The application program may continue to be in a running state.

According to an embodiment, an electronic device may generate a plurality of display objects corresponding to each pop-up window based on a plurality of pop-up windows. The electronic device may improve user convenience in a use environment for the plurality of pop-up windows.

According to an embodiment, when restoring a display object to a pop-up window and displaying the same in response to a second interaction input, an electronic device may display the restored pop-up window based on a location of the pop-up window at a first time point at which a first interaction input is detected. User convenience may be improved when utilizing the pop-up window.

Effects to be accomplished herein are not limited to the above-described effects, and still other effects not described may be clearly understood by one of ordinary skill in the art to which the disclosure pertains from the following description.

### [Brief Description of Drawings]

In relation to description of drawings, the same or similar reference numerals may be used for the same or similar components.
FIG. 1 is a block diagram of an electronic device in a network environment according to an embodiment of the disclosure.
FIG. 2 is a block diagram of an electronic device according to an embodiment of the disclosure.
FIG. 3 is a flowchart illustrating a method of managing a pop-up window according to an embodiment of the disclosure.
FIG. 4 is an exemplary diagram illustrating a method of managing a pop-up window according to an embodiment of the disclosure.
FIG. 5 is a flowchart illustrating a method of managing a plurality of pop-up windows according to an embodiment of the disclosure.
FIG. 6a is a first exemplary diagram illustrating a method of managing a plurality of pop-up windows according to an embodiment of the disclosure.
FIG. 6b is a second exemplary diagram illustrating a method of managing a plurality of pop-up windows according to an embodiment of the disclosure.
FIG. 7 is an exemplary diagram illustrating a method of managing three or more pop-up windows according to an embodiment of the disclosure.
FIG. 8 is an exemplary diagram illustrating a method of distinguishably displaying a plurality of pop-up windows in a first edge region and a second edge region of a display according to an embodiment of the disclosure.
FIG. 9 is an exemplary diagram illustrating a method of changing locations of a plurality of display objects generated based on a plurality of pop-up windows according to an embodiment of the disclosure.
FIG. 10a is a first exemplary diagram illustrating a method of displaying a plurality of pop-up windows corresponding to an integrated display object, in response to an interaction input for the integrated display object according to an embodiment of the disclosure.
FIG. 10b is a second exemplary diagram illustrating a method of displaying a plurality of pop-up windows corresponding to an integrated display object, in response to an interaction input for the integrated display object according to an embodiment of the disclosure.
FIG. 11 is an exemplary diagram illustrating a method of providing a preview screen in response to an input for an indicator and a display object according to an embodiment of the disclosure.

### [Mode for the Invention]

Hereinafter, embodiments of the disclosure will be described in detail with reference to the drawings to be easily carried out by a person of ordinary skill in the art to which the disclosure pertains. However, the disclosure may be implemented in various different forms, and is not limited to the embodiments described herein. In relation to description of the drawings, the same or similar reference numerals may be used for the same or similar components. Also, in the drawings and related description, description related to well-known functions and constitutions may be omitted for clarity and brevity.

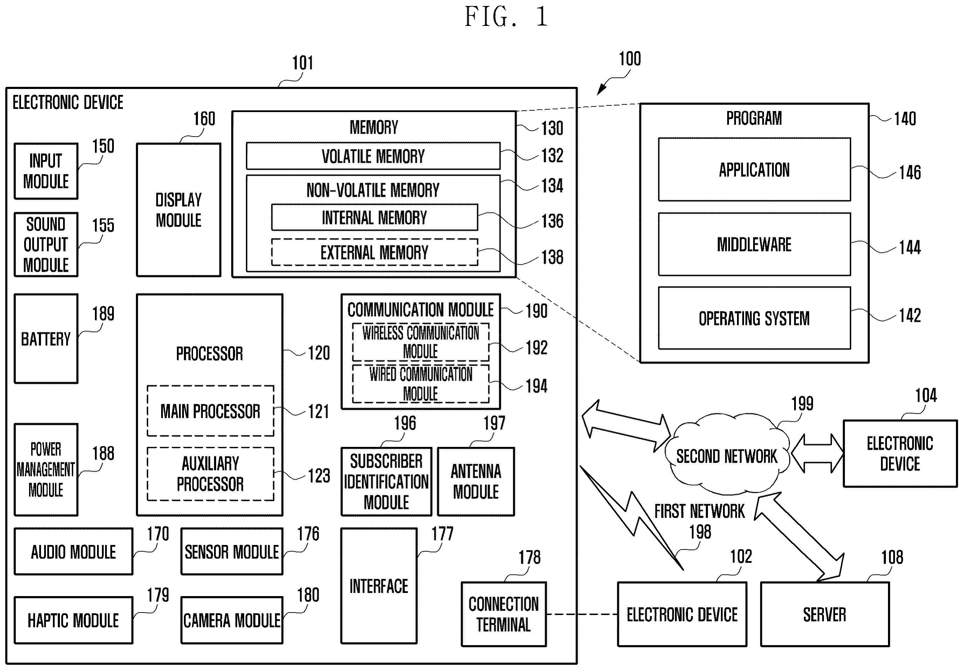

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)(e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). For example, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

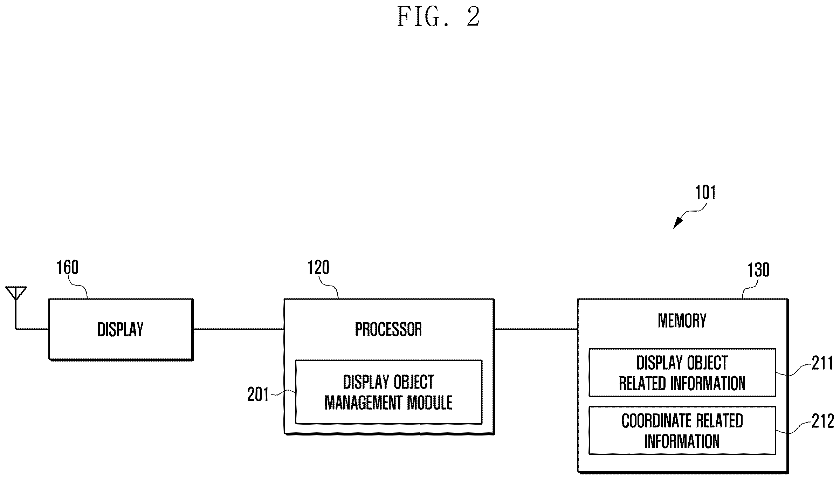

FIG. 2 is a block diagram of an electronic device according to an embodiment of the disclosure.

The electronic device 101 of FIG. 2 (e.g., electronic device 101 of FIG. 1) may be at least partially similar to the electronic device 101 of FIG. 1, or may further include other embodiments of the electronic device. For example, in response to execution of a specific application program, the electronic device 101 may support a function of displaying the specific application program in the form of a pop-up window. The electronic device 101 may display an execution screen of the specific application program in execution based on the pop-up window that at least partially overlaps a background image.

According to an embodiment, in response to a first interaction input for a first pop-up window, the electronic device 101 may change the first pop-up window to a first display object and may display the same. The electronic device 101 may store first coordinate information for the first pop-up window at a first time point at which the first interaction input is detected. In response to a second interaction input for the first display object, the electronic device 101 may restore the first display object to the first pop-up window, and may display the restored first pop-up window based on the first coordinate information.

With reference to FIG. 2, the electronic device 101 may include a processor (e.g., processor 120 of FIG. 1), a memory (e.g., memory 130 of FIG. 1), and/or a display (e.g., display module160 of FIG. 1). For example, the processor 120 of the electronic device 101 may be operatively or electrically connected to the memory 130 and the display 160.

According to an embodiment, the processor 120 may include at least one processor that includes a processing circuit. According to an embodiment, the memory 130 may store instructions that the processor 120 (e.g., at least one processor) individually or collectively executes.

According to an embodiment, the processor 120 of the electronic device 101 may execute a program (e.g., program 140 of FIG. 1) stored in the memory 130 to control at least one other component (e.g., hardware or software component) and to perform various data processing operations. For example, in response to an execution instruction for a specific application program stored in the memory 130, the processor 120 may display the specific application program in the form of a pop-up window. The processor 120 may detect a first interaction input for the pop-up window, and in response to detection of the first interaction input, convert the pop-up window to a display object. The processor 120 may store first coordinate information for the pop-up window at a first time point at which the first interaction input is detected. The processor 120 may detect a second interaction input for the display object and in response to detection of the second interaction input, restore the display object to the pop-up window. The processor 120 may display the restored pop-up window based on the first coordinate information.

According to an embodiment, the processor 120 may include a display object management module 201 for managing the display object, and the display object management module 201 may perform a function related to the display object generated based on the pop-up window.

For example, in response to detection of a first interaction input, the display object management module 201 may generate a display object based on a pop-up window. For example, while adjusting the pop-up window to a set size, the display object management module 201 may adjust a displayed execution screen to the set size through the pop-up window. A size of the execution screen may be determined based on a screen ratio according to the set size. The display object management module 201 may display the display object based on a first time point (e.g., first reference line) at which the first interaction input is terminated. The display object may include at least a partial region of the execution screen. The display object management module 201 may store first coordinate information for the pop-up window at a first time point at which the first interaction input is detected.

For example, in response to detection of a second interaction input for the display object, the display object management module 201 may restore the display object to the pop-up window. The display object management module 201 may restore the display object to the pop-up window based on the existing pop-up window size. The display object management module 201 may display the restored pop-up window based on the stored first coordinate information.

According to an embodiment, the memory 130 may store display object related information 211 and coordinate related information 212. For example, the display object related information 211 may include configuration information related to a size of the display object and a shape of the display object when generating the display object based on the pop-up window. For example, the coordinate related information 212 may include the first coordinate information for the pop-up window at a first time point at which the first interaction input for the pop-up window is detected.

According to an embodiment, in response to a first interaction input for a pop-up window, the processor 120 may identify first coordinate information of the pop-up window, and may store the identified first coordinate information in the coordinate related information 212 of the memory 130. In response to termination of the first interaction input, the processor 120 may identify a first reference line based on the pop-up window, and may store the identified first reference line in the display object related information 211 of the memory 130. In response to termination of the first interaction input, the processor 120 convert the pop-up window to the display object, and may display the display object based on the first reference line. In response to a second interaction input for the display object, the processor 120 may restore the display object to the pop-up window, and may display the restored pop-up window based on the first coordinate information stored in the coordinate related information 212.

According to an embodiment, when there are a plurality of pop-up windows, the processor 120 may individually identify each pop-up window. For example, the processor 120 may generate a first display object in response to a (1-1)-th interaction input (e.g., a touch and drag input) for a first pop-up window, and may generate a second display object in response to a (1-2)-th interaction input for a second pop-up window. When the first display object and the second display object are displayed on the same edge region (e.g., edge region) based on the display, the processor 120 may generate a third display object (e.g., integrated object) by integrating the first display object and the second display object. In a state in which the generated third display object is being displayed, the processor 120 may detect a second interaction input (e.g., multi-touch input, double touch input) for the third display object, and in response to the second interaction input, restore the third display object (e.g., first display object and second display object) to the pop-up window. For example, the processor 120 may restore the first pop-up window based on the first display object, and may restore the second pop-up window based on the second display object.

According to an embodiment, when generating a first display object, the processor 120 may maintain a first application program corresponding to the first display object to be in a running state. For example, when executing the first application program, the processor 120 may display an execution screen of the first application program based on a first pop-up window. The processor 120 may generate the first display object by adjusting the first pop-up window to a preset size. According to an embodiment, when the first display object is generated based on the first pop-up window, the processor 120 may maintain a state in which the first application program corresponding to the first pop-up window and the first display object is in execution. For example, when a video is being played by the first application program, the processor 120 may display the video being played based on the first display object.

According to an embodiment, when displaying a first display object, the processor 120 may adjust at least one of brightness, illuminance, and saturation of the first display object. For example, the processor 120 may display the first display object to appear relatively dark compared to other display regions around the first display object. The processor 120 may display the first display object by applying at least a partially darkening effect (e.g., dim effect, darkening effect, and effect of lowering brightness).

According to an embodiment, when displaying a first display object, the processor 120 may determine an upper boundary line (e.g., first edge line) of the first display object as a first reference line. For example, if a second display object is generated while the first display object is being displayed, the processor 120 may compare relative locations of the determined first reference line (e.g., upper boundary line of first display object) and an upper boundary line (e.g., second reference line) of the second display object. For example, whether the first reference line is located relatively higher or lower than the second reference line may be determined. According to an embodiment, when the first reference line is located relatively higher than the second reference line, the processor 120 may display a first indicator converted from the first display object based on the first reference line. Here, the second display object may be displayed adjacent to the bottom surface of the first indicator. According to an embodiment, when the first reference line is located relatively lower than the second reference line, the processor 120 may determine a lower boundary line (e.g., second edge line) of the first display object as a third reference line. The processor 120 may display a second indicator converted from the second display object based on the third reference line. Here, the first display object may be displayed adjacent to the top surface of the second indicator.

According to an embodiment, the processor 120 may generate a third display object (e.g., integrated object) based on a first display object and a second display object. For example, when the first display object and the second display object are placed to be adjacent to each other, the third display object based on the first display object and the second display object may be generated. For example, if the first display object is converted to the first indicator, the processor 120 may generate the third display object based on the first indicator and the second display object. As another example, if the second display object is converted to a second indicator, the processor 120 may generate the third display object (e.g., integrated object) based on the first display object and the second indicator. According to an embodiment, when the third display object is generated, the processor 120 may distinguishably recognize an indicator and a display object included in the third display object. For example, when the first display object is included in the third display object, the processor 120 may determine that the first display object is relatively most recently generated.

According to an embodiment, in response to a second interaction input for the third display object, when the first display object included in the third display object is restored to a first pop-up window, the processor 120 may display the first pop-up window based on a top layer. For example, if each of a plurality of display objects included in the third display object is restored to a pop-up window, the processor 120 may display a plurality of pop-up windows in an at least partially overlapping form. Here, the processor 120 may display the first pop-up window based on the top layer.

According to an embodiment, in response to a second interaction input (e.g., multi-touch input) for the third display object (e.g., third display object in which first display object and second display object are integrated), the processor 120 may restore a first pop-up window corresponding to the first display object and a second pop-up window corresponding to the second display object. For example, when the first pop-up window is converted to the first display object, the first pop-up window may be displayed based on (1-1)-th coordinate information at a (1-1)-th time point at which a (1-1)-th interaction input occurred. The processor 120 may display the restored first pop-up window based on the (1-1)-th coordinate information. For example, when the second pop-up window is converted to the second display object, the second pop-up window may be displayed based on (1-2)-th coordinate information at a (1-2)-th time point at which a (1-2)-th interaction input occurred. The processor 120 may display the restored second pop-up window based on the (1-2)-th coordinate information.

According to an embodiment, in response to a first interaction input for a first pop-up window, the electronic device 101 may convert the first pop-up window to a first display object and display the same. The processor 120 of the electronic device 101 may store, in the memory 130, first coordinate information for the first pop-up window at a first time point at which the first interaction input (e.g., a touch input and a drag input of converting the first pop-up window to the first display object) occurred. In response to a second interaction input for the first display object (e.g., a touch input for restoring the first display object to the first pop-up window), the electronic device 101 may restore the first display object to the first pop-up window. The processor 120 may display the restored first pop-up window based on the first coordinate information stored in the memory 130.

According to an embodiment, the electronic device 101 may detect a second interaction input (e.g., multi-touch input, double touch input) for a third display object (e.g., integrated object) generated based on a plurality of pop-up windows. For example, the third display object may be generated based on a first display object and a second display object. In response to the second interaction input, the processor 120 of the electronic device 101 may display a first pop-up window with the first display object restored based on first coordinate information, and may display a second pop-up window with the second display object restored based on second coordinate information. According to an embodiment, in response to a single second interaction input, the electronic device 101 may substantially simultaneously restore the plurality of pop-up windows and display the same through the display 160. For example, the processor 120 may hierarchically display the plurality of pop-up windows. The plurality of pop-up windows may be displayed in an at least partially overlapping form.

According to an embodiment, in response to a first interaction input for a pop-up window, the electronic device 101 may convert the pop-up window to a display object and may display the same. In response to a second interaction input for the display object, the electronic device 101 may restore the display object to the pop-up window and may display the same. According to an embodiment, the electronic device 101 may provide an execution screen in the form of a pop-up window corresponding to each application program to a user utilizing a plurality of application programs. In relation to a pop-up window, the electronic device 101 may perform at least one operation among operations of generating a display object, displaying the display object, aligning the display object, and restoring the display object to the pop-up window. According to an embodiment, when the user utilizes the plurality of application programs, the electronic device 101 may provide a display object (e.g., user interface) for a plurality of pop-up windows and may improve user convenience.

According to an embodiment, an electronic device (e.g., electronic device 101 of FIGS. 1 and 2) may include a display (e.g., display module 160 of FIG. 1), a memory (e.g., memory 130 of FIGS. 1 and 2) configured to store instructions, and the processor 120 operatively connected to the display 160 and the memory 130. According to an embodiment, the instructions, when executed by the processor 120, may cause the electronic device 101 to, in response to a first interaction input for a first pop-up window, acquire first coordinate information of the first pop-up window, in response to termination of the first interaction input, determine a first edge line of the first pop-up window as a first reference line, display a first display object corresponding to the first pop-up window based on the first reference line and a first point at which the first interaction input is terminated, and in response to a second interaction input for the first display object, display the first pop-up window corresponding to the first display object based on the first coordinate information.

According to an embodiment, the instructions, when executed by the processor 120, may cause the electronic device 101 to generate the first display object by adjusting the first pop-up window to a preset size and to display the generated first display object based on the first reference line and the first point.

According to an embodiment, the instructions, when executed by the processor 120, may cause the electronic device 101 to, when the first display object is displayed, maintain a state in which an application program of the first pop-up window corresponding to the first display object is in execution.

According to an embodiment, the instructions, when executed by the processor 120, may cause the electronic device 101 to, when the first display object is displayed, adjust at least one of brightness, illuminance, and saturation of the first display object.

According to an embodiment, the instructions, when executed by the processor 120, may cause the electronic device 101 to, in a state in which the first display object is being displayed, determine an upper boundary line for the first display object as the first reference line, in response to a third interaction input for a second pop-up window, acquire second coordinate information of the second pop-up window, in response to termination of the third interaction input, determine an upper boundary line for the second pop-up window as a second reference line, generate a second display object based on the second pop-up window, when a second point at which the third interaction input is terminated and the first point at which the first interaction input is terminated are included in a first edge region of the display, identify relative locations of the first reference line and the second reference line, when the first reference line is located higher than the second reference line, convert the first display object to a first indicator based on the first reference line and display the same, and in response to a fourth interaction input for the first indicator, display the first pop-up window corresponding to the first display object based on the first coordinate information.

According to an embodiment, the instructions, when executed by the processor 120, may cause the electronic device 101 to adjust a location of the second display object such that an upper boundary line of the second display object is displayed adjacent to the bottom surface of the first indicator.

According to an embodiment, the instructions, when executed by the processor 120, may cause the electronic device 101 to, when the first reference line is located lower than the second reference line, determine a lower boundary line for the first display object as a third reference line, and convert the first display object to the first indicator based on the third reference line and display the same.

According to an embodiment, the instructions, when executed by the processor 120, may cause the electronic device 101 to adjust a location of the second display object such that a lower boundary line of the second display object is displayed adjacent to the top surface of the first indicator.

According to an embodiment, the instructions, when executed by the processor 120, may cause the electronic device 101 to identify a multi-touch input for an integrated object that includes the first indicator and the second display object, in response to the multi-touch input, identify the first pop-up window corresponding to the first indicator and the second pop-up window corresponding to the second display object, display the identified first pop-up window based on the first coordinate information, and display the identified second pop-up window based on the second coordinate information.

According to an embodiment, the instructions, when executed by the processor 120, may cause the electronic device 101 to hierarchically display the second pop-up window corresponding to the second display object to be placed relatively higher than the first pop-up window corresponding to the first indicator.

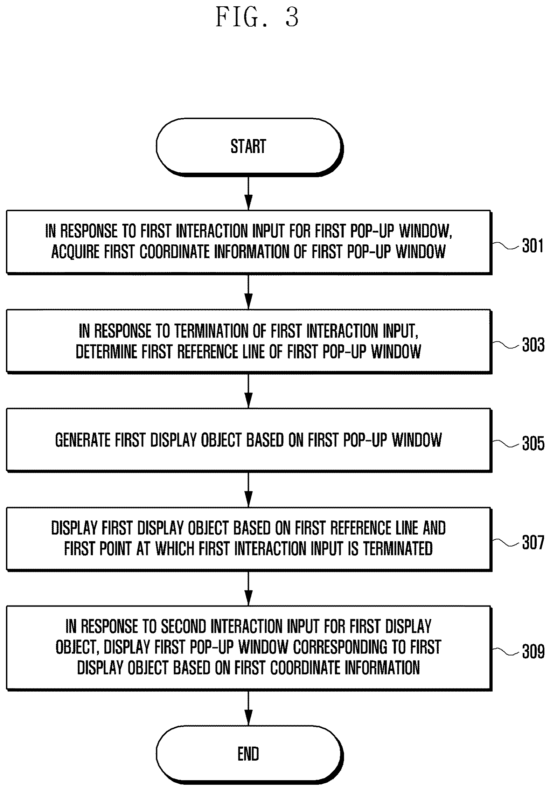

FIG. 3 is a flowchart illustrating a method of managing a pop-up window according to an embodiment of the disclosure.

In the following embodiment, each of operations may be sequentially performed, but is not necessarily sequentially performed. For example, the order of each of the operations may be changed, and at least two operations may be performed in parallel.

According to an embodiment, operation 301 to operation 311 may be understood to be performed by a processor (e.g., processor 120 of FIGS. 1 and 2) of an electronic device (e.g., electronic device 101 of FIGS. 1 and 2).

The electronic device 101 of FIG. 3 may be at least partially similar to the electronic device 101 of FIGS. 1 and 2, or may further include other embodiments of the electronic device. For example, in response to execution of a specific application program, the electronic device 101 may support a function of displaying an execution screen of the specific application program based on a pop-up window. The electronic device 101 may display the execution screen of the specific application program in execution based on the pop-up window that at least partially overlaps a background image.

In operation 301, in response to a first interaction input for a first pop-up window, a processor (e.g., processor 120 of FIGS. 1 and 2) of the electronic device 101 may acquire first coordinate information of the first pop-up window. For example, the first coordinate information may include location information of the first pop-up window, representing a placement location of the first pop-up window based on a display region of a display (e.g., display module 160 of FIG. 1 and display 160 of FIG. 2). According to an embodiment, the first interaction input may include a touch input detected in at least a partial region of the first pop-up window and a gesture input of moving (e.g., dragging) the touch input to an edge region of the display 160. For example, the first interaction input may include first coordinate information at a first time point at which a touch input for the first pop-up window occurs and second coordinate information at a second time point at which a gesture input for the first pop-up window is terminated. According to an embodiment, in response to the first interaction input, the processor 120 may store the acquired first coordinate information in a memory (e.g., memory 130 of FIGS. 1 and 2).

In operation 303, in response to termination of the first interaction input, the processor 120 may determine a first reference line of the first pop-up window. For example, the processor 120 may detect a situation in which a touch input according to the first interaction input leaves the edge region of the display 160 (e.g., a situation in which the touch input moves past the edge region of the display 160, a situation in which the touch input is released based on the edge region of the display 160), and when the situation is detected, may determine that the first interaction input is terminated. In response to a situation in which the first interaction input is terminated, the processor 120 may identify second coordinate information at a second time point at which the termination is detected. The processor 120 may determine the first reference line based on the identified second coordinate information. According to an embodiment, the processor 120 may identify an upper boundary line and a lower boundary line based on the first pop-up window, and may identify coordinate information on the upper boundary line at the second time point. The processor 120 may determine the first reference line based on coordinate information of the upper boundary line of the first pop-up window.

In operation 305, the processor 120 may generate the first display object based on the first pop-up window. For example, if a situation in which the first interaction input is terminated is detected, the processor 120 may convert the first pop-up window to a preset first display object. For example, the width and the height of the first display object may be determined based on the first pop-up window according to a set display ratio. The first display object may be implemented such that at least a partial region of the first pop-up window may be displayed. According to an embodiment, the size (e.g., width and height) of the first display object may be determined based on a contact area according to a touch input of the user. The processor 120 may display a portion of an execution screen being displayed on the first pop-up window based on the first display object.

In operation 307, the processor 120 may display the first display object based on the first reference line and a first point at which the first interaction input is terminated. For example, the processor 120 may identify second coordinate information of the first point corresponding to the first interaction input at a second time point at which the first interaction input is terminated. The processor 120 may display the generated first display object based on the identified second coordinate information. The processor 120 may display the generated first display object based on the determined first reference line (e.g., upper boundary line of first pop-up window at second time point).

In operation 309, in response to a second interaction input for the first display object, the processor 120 may display the first pop-up window corresponding to the first display object based on the first coordinate information. For example, in response to the second interaction input for the first display object, the processor 120 may restore the first pop-up window based on the first display object, and may display the restored first pop-up window based on the first coordinate information.

According to an embodiment, the second interaction input may include a single touch input and a double touch input (e.g., multi-touch input). For example, if a multi-touch input for the first display object is detected in a situation in which the first pop-up window and the second pop-up window are integrated in the first display object, the processor 120 may restore and display the first pop-up window and the second pop-up window together. According to an embodiment, if a multi-touch input according to the second interaction input is detected for a display object generated based on a plurality of pop-up windows, the processor 120 may simultaneously restore the first pop-up window and the second pop-up window included in the plurality of pop-up windows and may display the same through the display 160.

With reference to FIG. 3, the first coordinate information may include coordinate information for the first pop-up window at a first time point at which the first interaction input occurred in operation 301. In response to the second interaction input for the first display object, the processor 120 may display the first pop-up window corresponding to the first display object based on an initial location of the first pop-up window (e.g., location of the first pop-up window at which the first interaction input occurred, and first coordinate information).

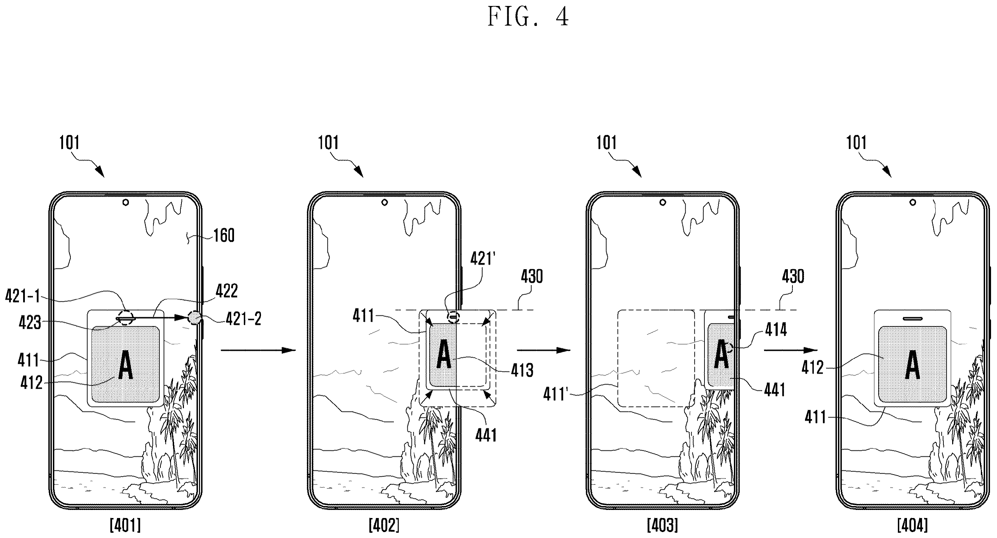

FIG. 4 is an exemplary diagram illustrating a method of managing a pop-up window according to an embodiment of the disclosure.

The electronic device 101 of FIG. 4 may be at least partially similar to the electronic device 101 of FIGS. 1 and 2, or may further include other embodiments of the electronic device. For example, in response to execution of a first application program, the electronic device 101 may support a function of displaying an execution screen of the first application program based on a first pop-up window 411. The first pop-up window 411 may be displayed to at least partially overlap a background image being displayed through a display (e.g., display module 160 of FIG. 1). The electronic device 101 may display the execution screen of the first application program in execution based on the first pop-up window 411 that at least partially overlaps the background image.

With reference to FIG. 4, a first screen 401 to a fourth screen 404 may be understood to be performed by a processor (e.g., processor 120 of FIGS. 1 and 2) of the electronic device 101.

With reference to FIG. 4, the processor 120 may display the first pop-up window 411 on the first screen 401 through the display 160. For example, an execution screen 412 (e.g., image, video, content) of the first application program may be displayed on the first pop-up window 411. In the first screen 401, the processor 120 may detect a first interaction input for the first pop-up window 411. For example, the first interaction input may include a (1-1)-th touch input 421-1 for the first pop-up window 411 and a gesture input 422 based on the touch input. The first interaction input may occur following the gesture input 422 with the (1-1)-th touch input 421-1 as a starting point, and a (1-2)-th touch input 421-2 may be included as an ending point. The first interaction input may include the gesture input 422 that is dragged to an edge region of the display 160 while the (1-1)-th touch input 421-1 is maintained, and may include the (1-2)-th touch input 421-2 in which the gesture input 422 is terminated. With reference to the first screen 401, the processor 120 may identify first coordinate information of the first pop-up window 411 at a first time point at which the (1-1)-th touch input 421-1 according to the first interaction input is detected. For example, the processor 120 may store coordinate information corresponding to the (1-1)-th touch input 421-1 as the first coordinate information. The processor 120 may identify second coordinate information of the first pop-up window 411 at a second time point at which the (1-2)-th touch input 421-2 is detected. For example, the processor 120 may store coordinate information corresponding to the (1-2)-th touch input 421-2 as the second coordinate information.

According to an embodiment, at least one pop-up window (e.g., first pop-up window 411) may include a pop-up bar 423 (e.g., focus handle bar). For example, in a situation in which a plurality of pop-up windows are displayed on a single screen, the processor 120 may apply and display a highlight effect (e.g., highlight) on a pop-up window that is focused (e.g., pop-up window located at upper end). With reference to the first screen 401, the processor 120 may display the pop-up bar 423 by changing a size and color of the pop-up bar 423 in a state in which the first pop-up window 411 is focused.

In the second screen 402, the processor 120 may move the first pop-up window 411 along a movement direction of the gesture input 422 according to the first interaction input. For example, the pop-up bar 423 of the first pop-up window 411 may move from the first coordinate information corresponding to the (1-1)-th touch input 421-1 to the second coordinate information corresponding to the (1-2)-th touch input 421-2. For example, the processor 120 may configure an edge region of one surface (e.g., right side) as a first edge region and may configure an edge region of the other surface (e.g., left side) as a second edge region, based on the display 160. For example, in response to a situation in which a center point of the pop-up bar 423 leaves the edge region of the display 160, the processor 120 may determine that the first interaction input is terminated. A point at which the first interaction input is terminated may include second coordinate information. As another example, in response to the first interaction input, the processor 120 may determine that the first interaction input is terminated when an area of the first pop-up window 411 displayed through a display area (e.g., area of first pop-up window 411 displayed through display 160) is reduced to about 50% or less of a total area.

With reference to the second screen 402, in response to termination of the first interaction input, the processor 120 may adjust the size of the first pop-up window 411 to a preset size. For example, the processor 120 may animate and thereby display a situation in which the first pop-up window 411 is being resized. If the size of the first pop-up window 411 is adjusted, the size of the execution screen 412 (e.g., content) may be adjusted in proportion to the size of the first pop-up window 411. For example, a resized execution screen 413 may resize and display content according to the adjusted size of the first pop-up window 411, without changing the displayed content. In the second screen 402, a partial region (e.g., first display object 441) of the first pop-up window 411 may be displayed through the display 160 in response to termination of the first interaction input, and a remaining region excluding the partial region from the entire area may not be displayed through the display 160. According to an embodiment, the processor 120 may determine a display location of the first display object 441 based on the center point of the pop-up bar 423. According to an embodiment, in response to termination of the first interaction input, the processor 120 may determine a first reference line 430 based on an upper boundary line of the first pop-up window 411. The processor 120 may store a display location 411' of the first pop-up window 411 at a time point at which the first interaction input starts and size information of the first pop-up window 411.

In a third screen 403, in response to termination of the first interaction input, the processor 120 may generate the first display object 441 based on the first pop-up window 411, and may display the first display object 441 based on the first reference line 430. For example, the first display object 441 may be generated by adjusting the size of the first pop-up window 411 to a preset size. For example, the processor 120 may display a portion of the execution screen 412 displayed on the first display object 441, based on the first pop-up window 411. The first display object 441 may be implemented in the form in which the width and the height of the first pop-up window 411 are reduced based on a set ratio. As another example, the processor 120 may dynamically determine the size of the first display object 441 based on content (A) included in the execution screen 412. As another example, when the content (A) is a video, the processor 120 may determine the size of the first display object 411 based on the size of the video. According to an embodiment, when the content (A) included in the execution screen 412 is modified, the size of the first display object 441 may be dynamically changed based on the modified content.

According to an embodiment, in response to a second interaction input (e.g., single touch input) for the first display object 441, the processor 120 may restore the first display object 441 to the first pop-up window 411. For example, the processor 120 may guide and display the location 411' at which the first pop-up window 411 is restored and displayed. The processor 120 may restore and display the first pop-up window 411 based on the stored display location 411' and size information.

In the fourth screen 404, the processor 120 may display the first pop-up window 411 restored based on the first display object 441. For example, the processor 120 may determine a placement location of the restored first pop-up window 411 based on the display location 411' at which the first interaction input for the first pop-up window 411 starts.

According to an embodiment, the electronic device 101 may convert the first pop-up window 411 to the first display object 441 and display the same in response to a first interaction input (421, 422) for the first pop-up window 411, and may restore the first display object 441 back to the first pop-up window 411 and display the same in response to a second interaction input for the first display object 441. The electronic device 101 may provide the user with a user interface that allows easy transition between a pop-up window and a display object, and may improve convenience according to the use of the pop-up window.

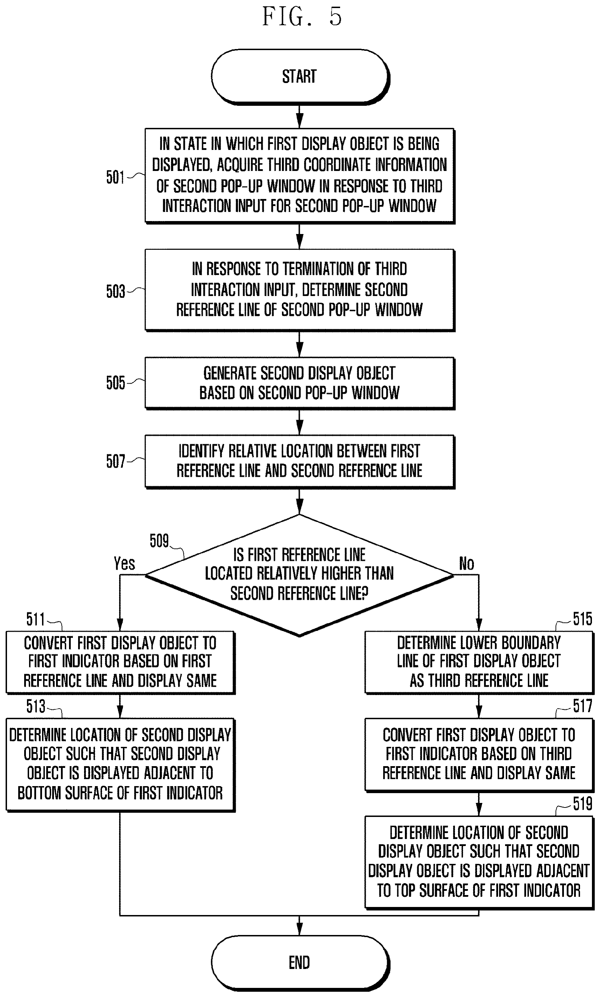

FIG. 5 is a flowchart illustrating a method of managing a plurality of pop-up windows according to an embodiment of the disclosure.

In the following embodiment, each of operations may be sequentially performed, but is not necessarily sequentially performed. For example, the order of each of the operations may be changed and at least two operations may be performed in parallel.

According to an embodiment, operations 501 to 519 may be understood to be performed by a processor (e.g., processor 120 of FIGS. 1 and 2) of an electronic device (e.g., electronic device 101 of FIGS. 1 and 2).

The electronic device 101 of FIG. 5 may be at least partially similar to the electronic device 101 of FIGS. 1 and 2, or may further include other embodiments of the electronic device. For example, in response to execution of a specific application program, the electronic device 101 may support a function of displaying an execution screen of the specific application program based on a pop-up window. The electronic device 101 may display the execution screen of the specific application program in execution based on the pop-up window that at least partially overlaps a background image.

The electronic device 101 of FIG. 5 may convert a first pop-up window to a first display object based on operation 301 to operation 307 of FIG. 3, and may be displaying the first display object.

In operation 501, in a state in which the first display object is being displayed, the processor (e.g., processor 120 of FIGS. 1 and 2) of the electronic device 101 may acquire second coordinate information of a second pop-up window in response to a third interaction input for the second pop-up window. For example, the second coordinate information may include location information of the second pop-up window, representing a placement location of the second pop-up window, based on a display region of a display (e.g., display module 160 of FIG. 1 and display 160 of FIG. 2). For example, the third interaction input refers to the substantially same input as the first interaction input of FIG. 3, and may include a touch input detected in at least a partial region of the second pop-up window and a gesture input that moves (e.g., drags) the touch input to the edge region of the display 160. For example, the third interaction input may include third coordinate information at a third time point at which a touch input for the second pop-up window occurs and fourth coordinate information at a fourth time point at which a gesture input for the second pop-up window is terminated. According to an embodiment, in response to the third interaction input, the processor 120 may store the acquired third coordinate information in a memory (e.g., memory 130 of FIGS. 1 and 2).

In operation 503, in response to termination of the third interaction input, the processor 120 may determine a second reference line of the second pop-up window. For example, the processor 120 may detect a situation in which a touch input according to the third interaction input leaves the edge region of the display 160 (e.g., a situation in which the touch input moves past the edge region of the display 160, a situation in which the touch input is released based on the edge region of the display 160), and if the situation is detected, may determine that the third interaction input is terminated. In response to a situation in which the third interaction input is terminated, the processor 120 may identify fourth coordinate information at a fourth time point at which the termination is detected. The processor 120 may determine the second reference line based on the identified fourth coordinate information. According to an embodiment, the processor 120 may identify an upper boundary line and a lower boundary line based on the second pop-up window, and may identify coordinate information of the upper boundary line at the fourth time point. The processor 120 may determine the second reference line based on the coordinate information of the upper boundary line for the second pop-up window.

In operation 505, the processor 120 may generate a second display object based on the second pop-up window. For example, if a situation in which the third interaction input is terminated, the processor 120 may convert the second pop-up window to a preset second display object. For example, the second display object may be generated based on the second pop-up window, with its width and height being determined according to a set display ratio. The second display object may be implemented such that at least a partial region of the second pop-up window is displayed. According to an embodiment, the size (e.g., width and height) of the second display object may be determined based on a contact area according to a touch input of the user. The processor 120 may at least partially display an execution screen being displayed through the second pop-up window, based on the second display object. For example, in a situation in which the second display object is displayed, an application program corresponding to the second pop-up window may remain in a running state.

In operation 507, the processor 120 may identify a relative location between the first reference line and the second reference line. The processor 120 may compare relative locations of the first reference line determined based on the first pop-up window and the second reference line determined based on the second pop-up window. For example, the processor 120 may determine whether the first reference line is located relatively higher than the second reference line, or whether the first reference line is located relatively lower than the second reference line.

In operation 509, the processor 120 may determine whether the first reference line is located relatively higher than the second reference line. For example, the processor 120 may compare coordinate information corresponding to the first reference line and coordinate information corresponding to the second reference line, based on the edge region of the display 160, and may identify whether the first reference line is located higher than the second reference line.

When the first reference line is located higher than the second reference line in operation 509 (yes operation), the processor 120 may convert the first display object to a first indicator based on the first reference line and may display the same in operation 511. For example, the processor 120 may convert the first display object to the first indicator, and may determine a location of the first indicator such that the first reference line is located in an upper boundary line of the first indicator.

In operation 513, the processor 120 may determine a location of the second display object such that the second display object is displayed adjacent to the bottom surface (e.g., lower boundary line) of the first indicator. For example, the processor 120 may recognize the first indicator and the second display object as a single display object. A first application program corresponding to the first indicator and a second application program corresponding to the second display object may remain in a running state.

When the first reference line is located lower than the second reference line in operation 509 (no operation), the processor 120 may determine a lower boundary line of the first display object as a third reference line in operation 515. For example, the processor 120 may determine the third reference line based on coordinate information of the lower boundary line of the first display object.

In operation 517, the processor 120 may convert the first display object to the first indicator based on the third reference line and may display the same. For example, the processor 120 may convert the first display object to the first indicator, and may determine a location of the first indicator such that the third reference line is located in the lower boundary line of the first indicator.

In operation 519, the processor 120 may determine a location of the second display object such that the second display object is displayed adjacent to the top surface (e.g., upper boundary line) of the first indicator. For example, the processor 120 may recognize the first indicator and the second display object as a single display object. The first application program corresponding to the first indicator and the second application program corresponding to the second display object may remain in a running state.

According to an embodiment, in response to the first interaction input for the first pop-up window, the electronic device 101 may convert the first pop-up window to the first display object and may display the same. In response to the first interaction input for the second pop-up window, the electronic device 101 may convert the second pop-up window to the second display object and may display the same. For example, the first interaction input may include a gesture input that moves in the same direction. The electronic device 101 may determine the first reference line according to the first pop-up window and the second reference line according to the second pop-up window based on the edge region of the display 160, and may identify a relative location between the first reference line and the second reference line. The electronic device 101 may determine a placement location of the first indicator corresponding to the first display object, based on the relative location between the first reference line and the second reference line. For example, when the first reference line is located relatively higher than the second reference line, the upper boundary line of the first indicator may be located in accordance with the first reference line. As another example, when the first reference line is located relatively lower than the second reference line, the third reference line may be determined along the lower boundary line of the first display object, and the lower boundary line of the first indicator may be located in accordance with the third reference line.

According to an embodiment, the electronic device 101 may determine a placement location of the first indicator corresponding to the first display object based on the relative location between the first reference line and the second reference line. According to an embodiment, when the first display object according to the first pop-up window is generated and the second display object according to the second pop-up window is generated, the first display object may be converted to the first indicator and displayed. According to an embodiment, being converted to the first indicator may represent that the first display object is generated relatively earlier than the second display object. By displaying the first indicator, the generation order of the first display object and the second display object may be provided to the user.

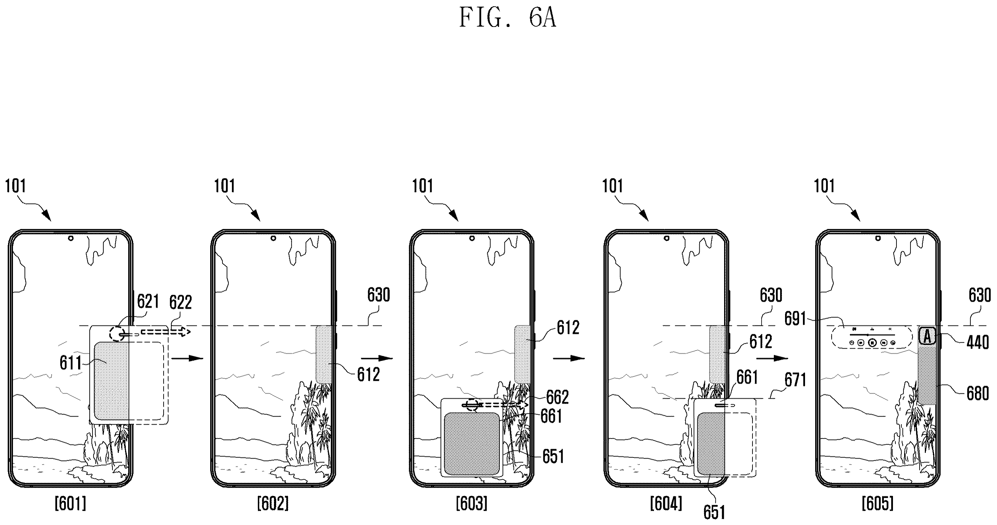

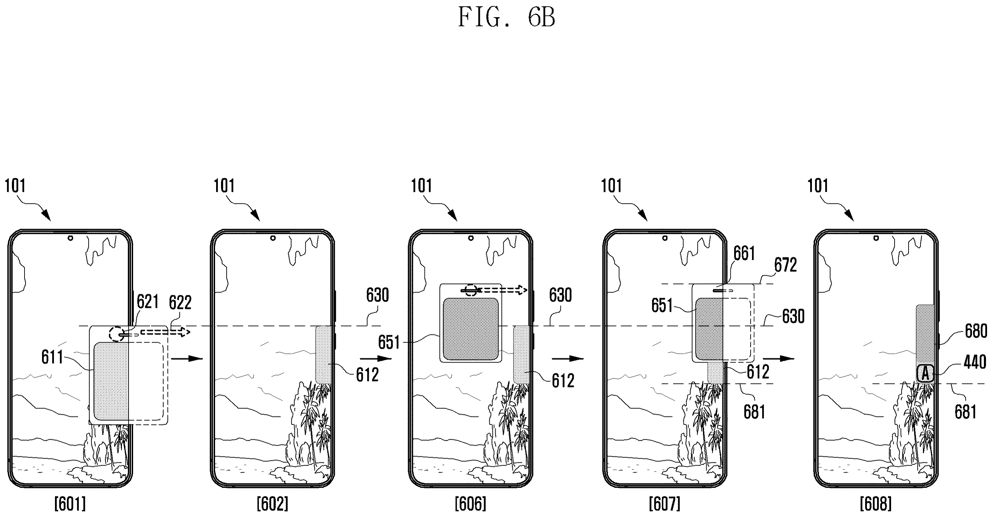

FIG. 6a is a first exemplary diagram illustrating a method of managing a plurality of pop-up windows according to an embodiment of the disclosure. FIG. 6b is a second exemplary diagram illustrating a method of managing a plurality of pop-up windows according to an embodiment of the disclosure.

The electronic device 101 of FIGS. 6a and 6b may be at least partially similar to the electronic device 101 of FIGS. 1 and 2, or may further include other embodiments of the electronic device. For example, in response to execution of a first application program, the electronic device 101 may support a function of displaying an execution screen (e.g., content) of the first application program based on a first pop-up window. The first pop-up window may be displayed to at least partially overlap a background image being displayed through a display (e.g., display module 160 of FIG. 1). The electronic device 101 may display the execution screen (e.g., content) of the first application program in execution based on the first pop-up window that at least partially overlaps the background image.

With reference to FIG. 6a, in a first screen 601, the processor 120 may move a first pop-up window 611 along a movement direction of a gesture input 622 according to a (1-1)-th interaction input (621, 622). For example, an execution screen (e.g., image, video, content) of the first application program may be displayed on the first pop-up window 611. The (1-1)-th interaction input (621, 622) may include a touch input 621 for the first pop-up window 611and a gesture input 622 based on the touch input 621. For example, the touch input 621 for the first pop-up window 611 may include a touch input for a pop-up bar of the first pop-up window 611. The (1-1)-th interaction input (621, 622) may include the gesture input 622 that is dragged to the edge region of the display 160, while the touch input 621 is maintained. For example, the processor 120 may configure an edge region of one surface (e.g., right side) as a first edge region and may configure an edge region of the other surface (e.g., left side) corresponding to an opposite direction of the one surface as a second edge region, based on the display 160. For example, in response to a situation in which a center point of the pop-up bar leaves the edge region of the display 160, the processor 120 may determine that the (1-1)-th interaction input (621, 622) is terminated. As another example, in response to the (1-1)-th interaction input (621, 622), the processor 120 may determine that the (1-1)-th interaction input (621, 622) is terminated when a display area of the first pop-up window 611 (e.g., display region of the first pop-up window 611 displayed through the display 160) is reduced to about 50% or less compared to a total area. According to an embodiment, in response to termination of the (1-1)-th interaction input (621, 622), the processor 120 may determine a first reference line 630 based on an upper boundary line of the first pop-up window 611.

In a second screen 602, in response to termination of the (1-1)-th interaction input, the processor 120 may adjust the size of the first pop-up window 611 to a preset size. If the size of the first pop-up window 611 is adjusted, the size of a first display object 612 (e.g., content) may be adjusted in proportion to the size of the first pop-up window 611. The processor 120 may generate the first display object 612 based on the first pop-up window 611, and may display the first display object 612 based on the first reference line 630. The processor 120 may determine a placement location of the first display object 612 such that an upper boundary line of the first display object 612 is located in accordance with the first reference line 630. For example, the processor 120 may display a portion of an execution screen (e.g., execution screen of first application program) displayed on the first pop-up window 611, based on the first display object 612. The first display object 612 may be implemented in the form in which the width and the height of the first pop-up window 611 are reduced according to a set ratio. As another example, the processor 120 may dynamically determine the size of the first display object 612 based on content included in the execution screen. As another example, when the content is a video, the processor 120 may determine the size of the first display object 612 based on the size of the video.

In a third screen 603, the processor 120 may display a second pop-up window 651 in response to execution of a second application program. For example, an execution screen (e.g., image, video, content) of the second application program may be displayed on the second pop-up window 651. In the third screen 603, the processor 120 may detect a (1-2)-th interaction input (661, 662) for the second pop-up window 651.

In a fourth screen 604, the processor 120 may move the second pop-up window 651 along a movement direction of the gesture input 622 according to the (1-2)-th interaction input (661, 662). For example, the execution screen (e.g., image, video, content) of the second application program may be displayed on the second pop-up window 651. The (1-2)-th interaction input (661, 662) may include a touch input 661 for the second pop-up window 651 and a gesture input 662 for the touch input 661. For example, the touch input 661 for the second pop-up window 651 may include a touch input for a pop-up bar of the second pop-up window 651. For example, in response to a situation in which a center point of the pop-up bar leaves the edge region of the display 160, the processor 120 may determine that the (1-2)-th interaction input (661, 662) is terminated. As another example, in response to the (1-2)-th interaction input (661, 662), the processor 120 may determine that the (1-2)-th interaction input (661, 662) is terminated when a display area of the second pop-up window 651 (e.g., display region of the second pop-up window 651 displayed through the display 160) is lowered to about 50% or less. According to an embodiment, in response to termination of the (1-2)-th interaction input (661, 662), the processor 120 may determine a second reference line 671 based on an upper boundary line of the second pop-up window 651.

In a fourth screen 604, the processor 120 may identify a relative location between the first reference line 630 and the second reference line 671. With reference to the fourth screen 604, the processor 120 may determine that the first reference line 630 is located relatively higher than the second reference line 671.

In a fifth screen 605, when the first reference line 630 is located relatively higher than the second reference line 671, the processor 120 may convert the first display object 612 to a first indicator 440 based on the first reference line 630 and may display the same. For example, the first indicator 440 may include an icon of an application program corresponding to the first pop-up window 611 or an icon representing content included in the first pop-up window 611. For example, the processor 120 may convert the first display object 612 to the first indicator 440, and may determine a location of the first indicator 440 such that the first reference line 630 is located in an upper boundary line of the first indicator 440. In the fifth screen 605, the processor 120 may determine a location of a second display object 680 such that the second display object 680 is displayed adjacent to the bottom surface (e.g., lower boundary line) of the first indicator 440. For example, the processor 120 may recognize the first indicator 440 and the second display object 680 as a single display object. A first application program corresponding to the first indicator 440 and a second application program corresponding to the second display object 680 may remain in a running state.

According to an embodiment, when the first application program corresponding to the first indicator 440 is in execution in displaying the first indicator 440, the processor 120 may display a user interface 691 (e.g., playback progress bar) representing the first application program in execution. For example, when the first application program is a music playback program, the processor 120 may display the playback progress bar 691 together with the first indicator 440. The playback progress bar 691 may be updated and displayed in accordance with playback of music.

According to an embodiment, the first exemplary diagram of FIG. 6a illustrates a method of managing a pop-up window corresponding to operations 501 to 513 of FIG. 5. The electronic device 101 may identify a relative location between the first reference line 630 and the second reference line 671, and when the first reference line 630 is located relatively higher than the second reference line 671, may display the first indicator 440 based on the first reference line 630.

With reference to FIG. 6b, description related to the first screen 601 and the second screen 602 is substantially the same as the description related to FIG. 6a and thus, may be replaced with the description of FIG. 6a described above.

In a sixth screen 606, in response to execution of the second application program, the processor 120 may display the second pop-up window 651. For example, an execution screen (e.g., image, video, content) of the second application program may be displayed on the second pop-up window 651. In the sixth screen 606, the processor 120 may detect the (1-2)-th interaction input (661) for the second pop-up window 651.

In a seventh screen 607, the processor 120 may move the second pop-up window 651 along a movement direction of a gesture input according to the (1-2)-th interaction input (661). For example, the execution screen (e.g., image, video, content) of the second application program may be displayed on the second pop-up window 651. For example, the touch input 661 for the second pop-up window 651 may include a touch input for the pop-up bar of the second pop-up window 651. For example, in response to a situation in which a center point of the pop-up bar leaves the edge region of the display 160, the processor 120 may determine that the (1-2)-th interaction input (661) is terminated. As another example, in response to the (1-2)-th interaction input (661), the processor 120 may determine that the (1-2)-th interaction input (661) is terminated when a display area of the second pop-up window 651 (e.g., area of the second pop-up window 651 displayed through the display 160) is reduced to about 50% or less compared to a total area. According to an embodiment, in response to termination of the (1-2)-th interaction input (661), the processor 120 may determine a third reference line 672 based on an upper boundary line of the second pop-up window 651.

In the seventh screen 607, the processor 120 may identify a relative location between the first reference line 630 and the third reference line 672. With reference to the seventh screen 607, the processor 120 may determine that the first reference line 630 is located relatively lower than the third reference line 672.

In an eighth screen 608, when the first reference line 630 is located relatively lower than the third reference line 672, the processor 120 may determine the lower boundary line of the first display object 612 as a fourth reference line 681. The processor 120 may convert the first display object 612 to the first indicator 440 based on the fourth reference line 681, and may display the same. For example, the first indicator 440 may include an icon of an application program corresponding to the first pop-up window 611 or an icon representing the content included in the first pop-up window 611. For example, the processor 120 may convert the first display object 612 to the first indicator 440, and may determine a location of the first indicator 440 such that the fourth reference line 681 is located in the lower boundary line of the first indicator 440. In the eight screen 608, the processor 120 may determine a location of the second display object 680 such that the second display object 680 is displayed adjacent to the top surface (e.g., upper boundary line) of the first indicator 440. For example, the processor 120 may recognize the first indicator 440 and the second display object 680 as a single display object. A first application program corresponding to the first indicator 440 and a second application program corresponding to the second display object 680 may remain in a running state.

According to an embodiment, the second exemplary diagram of FIG. 6b illustrates a method of managing a pop-up window corresponding to operations 501 to 519 and operations 515 to 519 of FIG. 5. The electronic device 101 may identify a relative location between the first reference line 630 and the third reference line 672, and when the first reference line 630 is located relatively lower than the third reference line 672, may determine the lower boundary line of the first display object 612 as the fourth reference line 681. The electronic device 101 may display the first indicator 440 based on the fourth reference line 681.

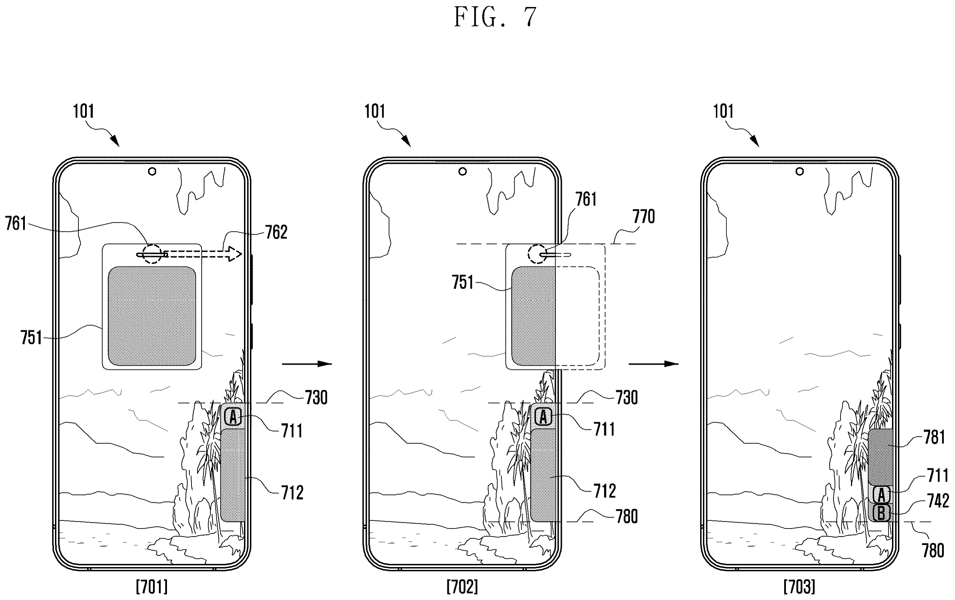

FIG. 7 is an exemplary diagram illustrating a method of managing three or more pop-up windows according to an embodiment of the disclosure.

The electronic device 101 of FIG. 7 may be at least partially similar to the electronic device 101 of FIGS. 1 and 2, or may further include other embodiments of the electronic device. For example, in response to execution of a first application program, the electronic device 101 may support a function of displaying an execution screen of the first application program based on a first pop-up window. The first pop-up window may be displayed to at least partially overlap a background image being displayed through a display (e.g., display module 160 of FIG. 1). The electronic device 101 may display the execution screen of the first application program in execution based on the first pop-up window that at least partially overlaps the background image.

With reference to FIG. 7, in a first screen 701, the processor 120 may display a first indicator 711 corresponding to a first pop-up window and a first display object 712 corresponding to a second pop-up window, based on the edge region of the display 160. The processor 120 may recognize the first indicator 711 and the first display object 712 by integrating them into a single display object. The processor 120 may display a first integrated object that includes the first indicator 711 and the first display object 712. For example, the processor 120 may determine a placement location of the first indicator 711 such that an upper boundary line of the first indicator 711 is located in accordance with a first reference line 730. The processor 120 may determine a placement location of the first display object 712 such that an upper boundary line of the first display object 712 is located adjacent to a lower boundary line of the first indicator 711. In the first screen 701, in response to execution of a third application program, the processor 120 may display a third pop-up window 751 and may detect an interaction input (761, 762) for the third pop-up window 751. For example, the interaction input (761, 762) may include a touch input 761 for the third pop-up window 751 and a gesture input 762 based on the touch input 761.

In a second screen 702, the processor 120 may move the third pop-up window 751 in response to the interaction input (761, 762) for the third pop-up window 751. The interaction input (761, 762) may include the gesture input 762 that is dragged to the edge region of the display 160 while the touch input 761 is maintained. In the second screen 702, in response to the interaction input (761, 762), the processor 120 may determine that the interaction input (761, 762) is terminated when a display area of the third pop-up window 751 (e.g., area of the third pop-up window 751 displayed through the display 160) is reduced to about 50% or less compared to a total area. According to an embodiment, in response to termination of the interaction input (761, 762), the processor 120 may determine a second reference line 770 and an upper boundary line of the third pop-up window 751. According to an embodiment, in response to termination of the interaction input (761, 762), the processor 120 may convert the third pop-up window 751 to a second display object 781 and may display the same.

In the second screen 702, the processor 120 may identify a relative location between the first reference line 730 and the second reference line 770. With reference to the second screen 702, the processor 120 may determine that the first reference line 730 is located relatively lower than the second reference line 770. In the second screen 702, when the first reference line 730 is located relatively lower than the second reference line 770, the processor 120 may determine a lower boundary line of the first integrated object (711, 712) as a third reference line 780.

In a third screen 703, the processor 120 may convert the first display object 712 to a second indicator 742 based on the third reference line 780 and may display the same. For example, the processor 120 may convert the first display object 712 to the second indicator 742, and may determine a location of the second indicator 742 such that the third reference line 780 is located in a lower boundary line of the second indicator 742. With reference to the third screen 703, the second indicator 742 may be placed based on the third reference line 780, the first indicator 711 may be placed adjacent to the second indicator 742, and the second display object 781 may be placed adjacent to the first indicator 711.

In the third screen 703, the processor 120 may recognize the first indicator 711, the second indicator 742, and the second display object 781 by integrating them into a single display object. The processor 120 may display a second integrated object that includes the first indicator 711, the second indicator 742, and the second display object 781.

According to an embodiment, the electronic device 101 may generate and display at least one indicator and at least one display object in relation to a plurality of pop-up windows. The electronic device 101 may generate at least one integrated object that includes at least one indicator and at least one display object. The electronic device 101 may maintain an application program corresponding to the at least one indicator and an application program corresponding to the at least one display object to be in a running state.

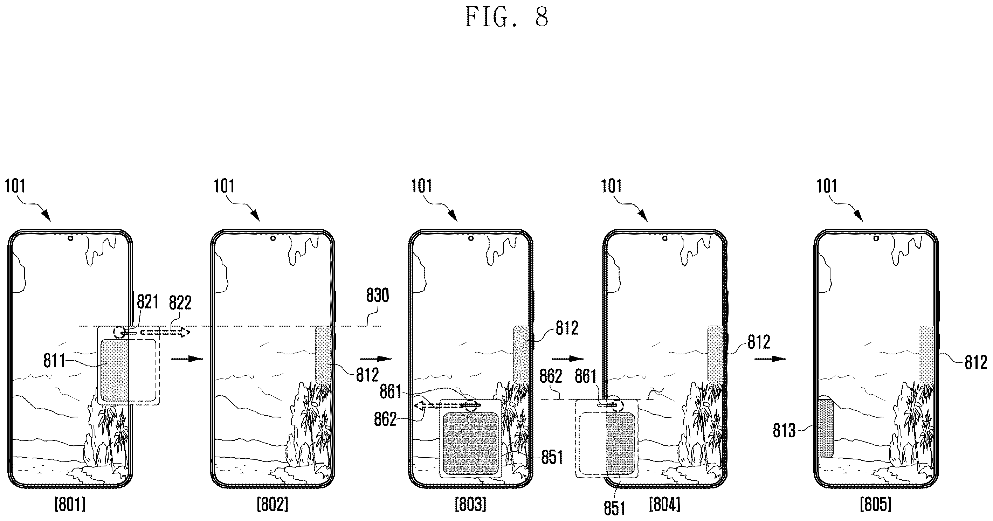

FIG. 8 is an exemplary diagram illustrating a method of distinguishably displaying a plurality of pop-up windows in a first edge region and a second edge region of a display according to an embodiment of the disclosure.

The electronic device 101 of FIG. 8 may be at least partially similar to the electronic device 101 of FIGS. 1 and 2, or may further include other embodiments of the electronic device. With reference to FIG. 8, a first screen 801 to a fifth screen 805 may be understood to be performed by a processor (e.g., processor 120 of FIGS. 1 and 2) of the electronic device 101.

In the first screen 801, in response to a first interaction input (821, 822) for a first pop-up window 811, the processor 120 may generate a first display object 812 based on the first pop-up window 811. The first interaction input (821, 822) may be an input that the first pop-up window 811 passes through a first edge region formed on one surface (e.g., right side) of a display (e.g., display module 160 of FIG. 1) along a first direction.

In a second screen 802, in response to termination of the first interaction input (821, 822), the processor 120 may determine an upper boundary line of the first pop-up window 811 as a first reference line 830, and may convert the first pop-up window 811 to the first display object 812 based on the determined first reference line 830 and may display the same.

In a third screen 803, in response to a second interaction input (861, 862) for a second pop-up window 851, the processor 120 may generate a second display object 813 based on the second pop-up window 851. The second interaction input (861, 862) may be an input that the second pop-up window 851 passes through a second edge region formed on one surface (e.g., left side) of the display 160 along a second direction opposite to the first direction. For example, the first edge region may include a right region formed adjacent to a right boundary line of the display 160, and the second edge region may include a left region formed adjacent to a left boundary line of the display 160.

In a fourth screen 804, in response to termination of the second interaction input (861, 862), the processor 120 may determine an upper boundary line of the second pop-up window 851 as a second reference line 862, and may convert the second pop-up window 851 to the second display object 813 based on the determined second reference line 862 and display the same.

In the fifth screen 805, the processor 120 may individually recognize and individually manage the first display object 812 placed in the first edge region (e.g., right region) and the second display object 813 placed in the second edge region (e.g., left region). For example, a placement location of the first display object 812 may be determined based on the first reference line 830, and a placement location of the second display object 813 may be determined based on the second reference line 862.

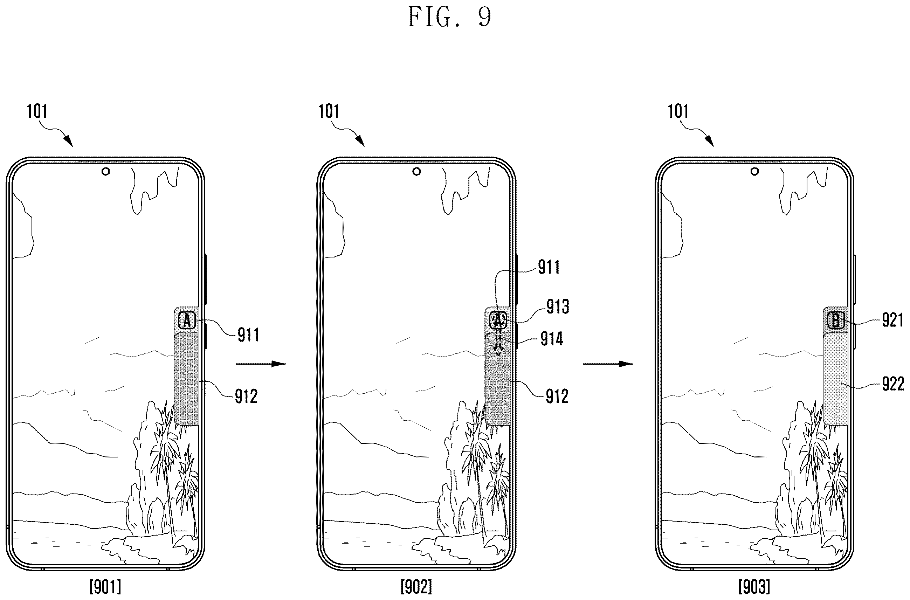

FIG. 9 is an exemplary diagram illustrating a method of changing locations of a plurality of display objects generated based on a plurality of pop-up windows according to an embodiment of the disclosure.

The electronic device 101 of FIG. 9 may be at least partially similar to the electronic device 101 of FIGS. 1 and 2, or may further include other embodiments of the electronic device. With reference to FIG. 9, a first screen 901 to a third screen 903 may be understood to be performed by a processor (e.g., processor 120 of FIGS. 1 and 2) of the electronic device 101.

With reference to FIG. 9, in the first screen 901, the processor 120 may display a first indicator 911 corresponding to a first pop-up window and a first display object 912 corresponding to a second pop-up window. For example, in response to generation of the first display object 912, the first indicator 911 may be generated based on a display object (not shown) for the first pop-up window. According to an embodiment, it may be determined that the display object (not shown) for the first pop-up window is initially generated and then the first display object 912 for the second pop-up window is sequentially generated. In response to generation of the first display object 912, the display object (not shown) for the first pop-up window may be converted to the first indicator 911 and displayed. In the first screen 901, the processor 120 may display the first indicator 911 and the first display object 912 such that the top surface (e.g., upper boundary line) of the first display object 912 is located adjacent to the bottom surface (e.g., lower boundary line) of the first indicator 911. The processor 120 may recognize the first indicator 911 and the first display object 912 by integrating them into a first integrated object.

In a second screen 902, the processor 120 may identify a touch input 913 for the first indicator 911 and a gesture input 914 based on the touch input 913. For example, the gesture input 914 may include a drag input that moves toward the first display object 912 while maintain the touch input 913 for the first indicator 911.

In the third screen 903, in response to the touch input 913 and the gesture input 914, the processor 120 may convert the first indicator 911 to a second display object 922, and may convert the first display object 912 to a second indicator 921. In the third screen 903, the processor 120 may display the second indicator 921 and the second display object 922 in the form in which the top surface (e.g., upper boundary line) of the second display object 922 is located adjacent to the bottom surface (e.g., lower boundary line) of the second indicator 921. The processor 120 may recognize the second indicator 921 and the second display object 922 by integrating them into a second integrated object.

According to an embodiment, the electronic device 101 may detect a user input that changes locations of an indicator and a display object based on an integrated object that includes at least one indicator and at least one display object. In response to the user input, the electronic device 101 may change a relative location between the indicator and the display object while converting the indicator to the display object or converting the display object to the indicator.

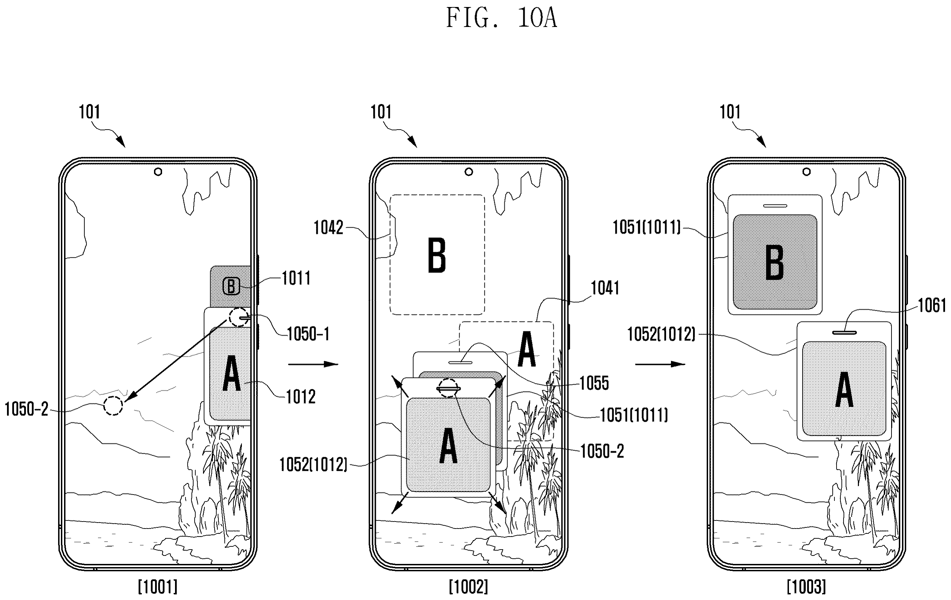

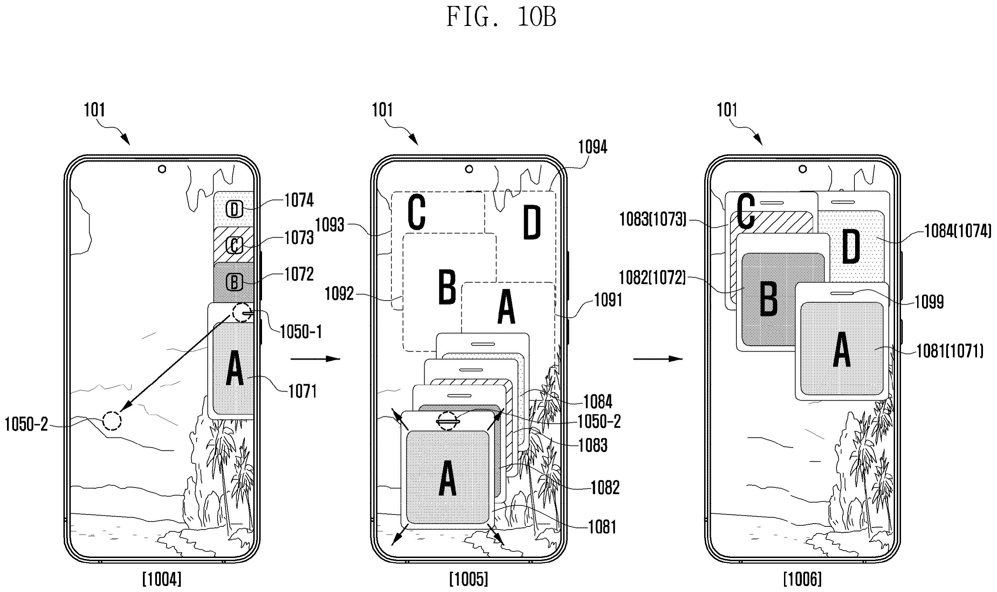

FIG. 10a is a first exemplary diagram illustrating a method of displaying a plurality of pop-up windows corresponding to an integrated display object, in response to an interaction input for the integrated display object (e.g., integrated object) according to an embodiment of the disclosure. FIG. 10b is a second exemplary diagram illustrating a method of displaying a plurality of pop-up windows corresponding to an integrated display object, in response to an interaction input for the integrated display object (e.g., integrated object) according to an embodiment of the disclosure.

The electronic device 101 of FIGS. 10a and 10b may be at least partially similar to the electronic device 101 of FIGS. 1 and 2, or may further include other embodiments of the electronic device.

With reference to FIG. 10a, a first screen 1001 to a third screen 1003 may be understood to be performed by a processor (e.g., processor 120 of FIGS. 1 and 2) of the electronic device 101.

With reference to FIG. 10a, in the first screen 1001, the processor 120 may display a first indicator 1011 corresponding to a first pop-up window and a first display object 1012 corresponding to a second pop-up window. For example, while a display object corresponding to the first pop-up window is being displayed, the processor 120 may detect a situation in which the first display object 1012 is generated. In response to generation of the first display object 1012, the processor 120 may generate and display the first indicator 1011 based on the display object (not shown) for the first pop-up window. According to an embodiment, it may be determined that the display object (not shown) for the first pop-up window is initially generated and then the first display object 1012 for the second pop-up window is sequentially generated. In response to generation of the first display object 1012, the display object (not shown) for the first pop-up window may be converted to the first indicator 1011 and thereby displayed.

With reference to FIG. 10a, the processor 120 may recognize the first indicator 1011 and the first display object 1012 as a single integrated object. In the first screen 1001, the processor 120 may detect an interaction input for the integrated object. For example, the interaction input may include a touch input and a drag input for a pop-up bar included in the first display object 1012. The interaction input may include an input from a first point 1050-1 at which the touch input occurs to a second point 1050-2 at which the drag input for the touch input is terminated.

According to an embodiment, in a second screen 1002, in response to the interaction input, the processor 120 may generate a first pop-up window 1051 corresponding to the first indicator 1011 and a second pop-up window 1052 corresponding to the first display object 1012. For example, the processor 120 may generate and display the first pop-up window 1051 and the second pop-up window 1052 based on the second point 1050-2 at which the interaction input is terminated. According to an embodiment, since the first display object 1012 is generated after the first indicator 1011 is generated, the second pop-up window 1052 may be displayed to be placed on the first pop-up window 1051. The second pop-up window 1052 may be displayed to at least partially overlap the first pop-up window 1051. For example, the first pop-up window 1051 may be converted to the first indicator 1011 and thereby displayed, and the second pop-up window 1052 may be converted to the first display object 1012 and thereby being displayed. This may indicate that a (1-1)-th interaction input for the first pop-up window 1051 initially occurred and then a (1-2)-th interaction input for the second pop-up window 1052 occurred sequentially later.

With reference to the second screen 1002, the processor 120 may identify first location information 1042 at which the first pop-up window 1051 was located and second location information 1041 at which the second pop-up window 1052 was located. In the second screen 1002, the processor 120 may exemplarily guide and display the first location information 1042 and the second location information 1041. According to an embodiment, the first location information 1042 may include first coordinate information at a first time point at which the interaction input (e.g., (1-1)-th interaction input) for the first pop-up window 1051 occurred, and the second location information 1041 may include second coordinate information at a second time point at which the interaction input (e.g., (1-2)-th interaction input) for the second pop-up window 1052 occurred.

According to an embodiment, in the third screen 1003, in response to termination of the interaction input, the processor 120 may display the first pop-up window 1051 based on the first location information 1042 and may display the second pop-up window 1052 based on the second location information 1041. As identified in the third screen 1003, the second pop-up window 1052 may be displayed to be located relatively higher than the first pop-up window 1051. For example, a pop-up bar 1061 included in the second pop-up window 1052 may be displayed with a highlight effect applied.

With reference to FIG. 10b, a fourth screen 1004 to a sixth screen 1006 may be understood to be performed by a processor (e.g., processor 120 of FIGS. 1 and 2) of the electronic device 101.

With reference to FIG. 10b, in the fourth screen 1004, the processor 120 may display a first display object 1071 (A) corresponding to a first pop-up window, a first indicator 1072 (B) corresponding to a second pop-up window, a second indicator 1073 (C) corresponding to a third pop-up window, and a third indicator 1074 (D) corresponding to a fourth pop-up window. According to an embodiment, the first pop-up window may be displayed at the hierarchically top end, and the second pop-up window, the third pop-up window, and the fourth pop-up window may be sequentially displayed below the first pop-up window. For example, the third pop-up window may be displayed to at least partially overlap the fourth pop-up window, and the second pop-up window may be displayed to at least partially overlap the third pop-up window and the fourth pop-up window. The first pop-up window may be displayed to at least partially overlap the second pop-up window, the third pop-up window, and the fourth pop-up window. According to an embodiment, the first pop-up window corresponding to the first display object 1071 (A) may be displayed at the top end (e.g., top layer), and the fourth pop-up window corresponding to the third indicator 1074 (D) may be displayed at the bottom end (e.g., bottom layer).

With reference to FIG. 10b, the processor 120 may recognize the first display object 1071 (A), the first indicator 1072 (B), the second indicator 1073 (C), and the third indicator 1074 (D) as a single integrated object. In the fourth screen 1004, the processor 120 may detect an interaction input for the integrated object. For example, the interaction input may include a touch input and a drag input for a pop-up bar included in the first display object 1071. The interaction input may include an input from the first point 1050-1 at which the touch input occurs to the second point 1050-2 at which the drag input for the touch input is terminated.

According to an embodiment, in a fifth screen 1005, in response to an interaction input, the processor 120 may generate a first pop-up window 1081 corresponding to the first display object 1071, a second pop-up window 1082 corresponding to the first indicator 1072, a third pop-up window 1083 corresponding to the second indicator 1073, and a fourth pop-up window 1084 corresponding to the third indicator 1074. For example, the processor 120 may generate and display the first pop-up window 1081 to the fourth pop-up window 1084 based on the second point 1050-2 at which the interaction input is terminated. According to an embodiment, since the first display object 1071 is displayed together with the first indicator 1072, the second indicator 1073, and the third indicator 1074, the first pop-up window 1081 corresponding to the first display object 1071 may be displayed to be placed at the relatively top end compared to the remaining pop-up windows 1082, 1083, and 1084. The first pop-up window 1081 may be displayed to at least partially overlap the remaining other pop-up windows 1082, 1083, and 1084.

With reference to the fifth screen 1005, the processor 120 may exemplarily guide and display first location information 1091 at which the first pop-up window 1081 was located, second location information 1092 at which the second pop-up window 1082 was located, third location information 1093 at which the third pop-up window 1083 was located, and fourth location information 1094 at which the fourth pop-up window 1084 was located. In the fifth screen 1005, the processor 120 may exemplarily guide and display the first location information 1091 to the fourth location information 1094. According to an embodiment, the first location information 1091 may include first coordinate information at a first time point at which the interaction input (e.g., (1-1)-th interaction input) for the first pop-up window 1081 occurred, and the second location information 1092 may include second coordinate information at a second time point at which the interaction input (e.g., (1-2)-th interaction input) for the second pop-up window 1082 occurred. The third location information 1093 may include third coordinate information at a third time point at which the interaction input (e.g., (1-3)-th interaction input) for the third pop-up window 1083 occurred, and the fourth location information 1094 may include fourth coordinate information at a fourth time point at which the interaction input (e.g., (1-4)-th interaction input) for the fourth pop-up window 1084 occurred.

According to an embodiment, in the sixth screen 1006, in response to termination of the interaction input, the processor 120 may display the first pop-up window 1081 based on the first location information 1091, may display the second pop-up window 1082 based on the second location information 1092, may display the third pop-up window 1083 based on the third location information 1093, and may display the fourth pop-up window 1084 based on the fourth location information 1094. As identified in the fifth screen 1005, the first pop-up window 1081 may be displayed to be located relatively lower than the remaining pop-up windows 1082, 1083, and 1084. For example, a pop-up bar 1099 included in the first pop-up window 1081 may be displayed with a highlight effect applied.

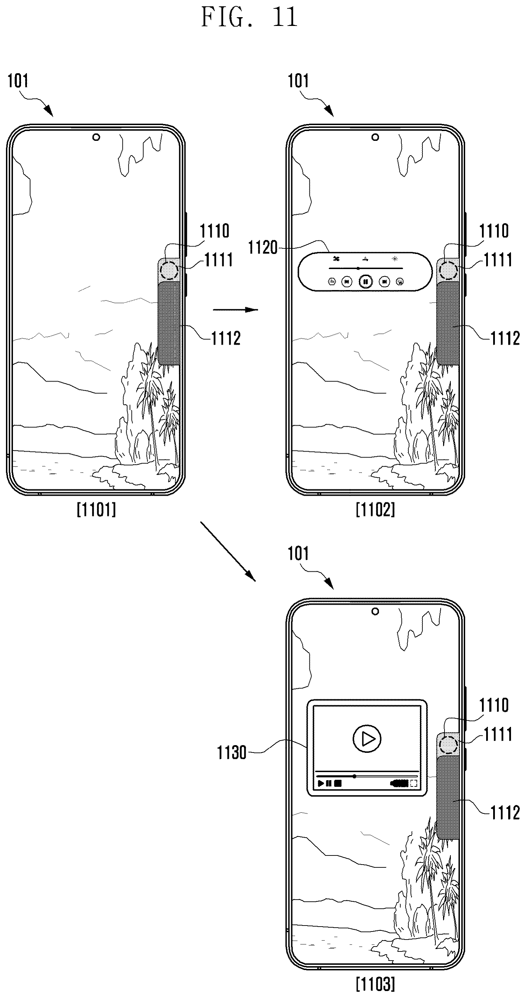

FIG. 11 is an exemplary diagram illustrating a method of providing a preview screen in response to an input for an indicator and a display object according to an embodiment of the disclosure.

The electronic device 101 of FIG. 11 may be at least partially similar to the electronic device 101 of FIGS. 1 and 2, or may further include other embodiments of the electronic device. With reference to FIG. 11, a first screen 1101, a second screen 1102, and a third screen 1103 may be understood to be performed by a processor (e.g., processor 120 of FIGS. 1 and 2) of the electronic device 101. For example, the first screen 1101 may be transitioned to one of the second screen 1102 and the third screen 1103, but is not limited thereto.

With reference to FIG. 11, in the first screen 1101, the processor 120 may display a first indicator 1111 corresponding to a first pop-up window and a first display object 1112 corresponding to a second pop-up window. For example, in response to generation of the first display object 1112, the first indicator 1111 may be generated based on a display object (not shown) for the first pop-up window. According to an embodiment, it may be determined that the display object (not shown) for the first pop-up window is initially generated and then the first display object 1112 for the second pop-up window is sequentially generated. In response to generation of the first display object 1112, the display object (not shown) for the first pop-up window may be converted to the first indicator 1111 and displayed.

In the first screen 1101, the processor 120 may detect a user input 1110 (e.g., long touch input, hovering input, pressure input, and input according to a set method) for the first indicator 1111, and in response to the user input, may display a preview screen related to the first pop-up window corresponding to the first indicator 1111.

In the second screen 1102, when a first application program related to the first indicator 1111 is a program related to music playback, the processor 120 may be playing back music based on the first application program. In the second screen 1102, in response to the user input 1110 for the first indicator 1111, the processor 120 may display a first user interface 1120 (e.g., playback progress bar) related to playback of music. For example, the first user interface 1120 may provide the user with a playback time for music that is being streamed. The processor 120 may maintain a state in which the first application program is in execution.

In the third screen 1103, when a second application program related to the first indicator 1111 is a program related to video playback, the processor 120 may be playing back a video based on the first application program. In the third screen 1103, in response to the user interface 1110 for the first indicator 1111, the processor 120 may display a second user interface 1130 (e.g., execution screen of video player) related to video playback. For example, the second user interface 1130 may display a situation in which the video is being played at a current time point. The second user interface 1130 may display an image frame for a video at a current time point or may display a video being streamed in real time. The second user interface 1130 may include a playback time for the video. The processor 120 may maintain a state in which the second application program is in execution.

According to an embodiment, while a pop-up window is being displayed by being converted to an indicator or a display object, the electronic device 101 may maintain an execution status of an application program corresponding to the pop-up window as is. For example, when the application program is a video playback program, the processor 120 may continuously execute the video playback program although it is not displayed through the display 160 (e.g., invisible state). For example, when the application program is a game program, the processor 120 may continuously perform operations according to execution of the game program. For example, when the application program is a program that provides news related information, the processor 120 may display updated news related information.

According to an embodiment, when a user input (e.g., long touch input, hovering input, pressure input, and input according to a set method) for an input indicator and a display object is detected, the electronic device 101 may display a configured user interface in relation to a corresponding application program, or may display a pop-up window corresponding to the application program as a virtual image. According to an embodiment, the electronic device 101 may continuously execute the application program converted to the indicator and the display object, and, in response to a configured user input, provide the user with an execution status of the application program at a current time point.

A method of managing a pop-up window according to an embodiment may include, in response to a first interaction input for a first pop-up window, acquiring first coordinate information of the first pop-up window; in response to termination of the first interaction input, determining a first edge line of the first pop-up window as a first reference line; based on the first reference line and a first point at which the first interaction input is terminated, displaying a first display object corresponding to the first pop-up window; and in response to a second interaction input for the first display object, displaying the first pop-up window corresponding to the first display object based on the first coordinate information.

The displaying of the first display object according to an embodiment may include generating the first display object by adjusting the first pop-up window to a preset size; and displaying the generated first display object based on the first reference line and the first point.

The method according to an embodiment may further include when the first display object is displayed, maintaining a state in which an application program of the first pop-up window corresponding to the first display object is in execution.

The method according to an embodiment may further include when the first display object is displayed, adjusting at least one of brightness, illuminance, and saturation of the first display object.

The method according to an embodiment may further include in a state in which the first display object is being displayed, determining an upper boundary line for the first display object as the first reference line; in response to a third interaction input for a second pop-up window, acquiring second coordinate information of the second pop-up window; in response to termination of the third interaction input, determining an upper boundary line for the second pop-up window as a second reference line; generating a second display object based on the second pop-up window; when a second point at which the third interaction input is terminated and the first point at which the first interaction input is terminated are included in a first edge region of a display, identifying relative locations of the first reference line and the second reference line; when the first reference line is located higher than the second reference line, converting the first display object to a first indicator based on the first reference line and displaying the same; and in response to a fourth interaction input for the first indicator, displaying the first pop-up window corresponding to the first display object based on the first coordinate information.

The method according to an embodiment may further include adjusting a location of the second display object such that an upper boundary line of the second display object is displayed adjacent to the bottom surface of the first indicator.

The method according to an embodiment may further include when the first reference line is located lower than the second reference line, determining a lower boundary line for the first display object as a third reference line; and converting the first display object to the first indicator based on the third reference line and displaying the same.

The method according to an embodiment may further include adjusting a location of the second display object such that a lower boundary line of the second display object is displayed adjacent to the top surface of the first indicator.

The method according to an embodiment may further include identifying a multi-touch input for an integrated object that includes the first indicator and the second display object; in response to the multi-touch input, identifying the first pop-up window corresponding to the first indicator and the second pop-up window corresponding to the second display object; displaying the identified first pop-up window based on the first coordinate information; and displaying the identified second pop-up window based on the second coordinate information.

The method according to an embodiment may further include hierarchically displaying the second pop-up window corresponding to the second display object to be placed relatively higher than the first pop-up window corresponding to the first indicator.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a memory configured to store instructions; and
a processor operatively connected to the display and the memory,
wherein the instructions, when executed by the processor, cause the electronic device to,
in response to a first interaction input for a first pop-up window, acquire first coordinate information of the first pop-up window,
in response to termination of the first interaction input, determine a first edge line of the first pop-up window as a first reference line,
based on the first reference line and a first point at which the first interaction input is terminated, display a first display object corresponding to the first pop-up window, and
in response to a second interaction input for the first display object, display the first pop-up window corresponding to the first display object based on the first coordinate information.

2. The electronic device of claim 1, wherein the instructions, when executed by the processor, cause the electronic device to,
generate the first display object by adjusting the first pop-up window to a preset size, and
display the generated first display object based on the first reference line and the first point.

3. The electronic device of claims 1 to 2, wherein the instructions, when executed by the processor, cause the electronic device to,
when the first display object is displayed, maintain a state in which an application program of the first pop-up window corresponding to the first display object is in execution, and
when the first display object is displayed, adjust at least one of brightness, illuminance, and saturation of the first display object.

4. The electronic device of claim 1, wherein the instructions, when executed by the processor, cause the electronic device to,
in a state in which the first display object is being displayed, determine an upper boundary line for the first display object as the first reference line,
in response to a third interaction input for a second pop-up window, acquire second coordinate information of the second pop-up window,
in response to termination of the third interaction input, determine an upper boundary line for the second pop-up window as a second reference line,
generate a second display object based on the second pop-up window,
when a second point at which the third interaction input is terminated and the first point at which the first interaction input is terminated are included in a first edge region of the display, identify relative locations of the first reference line and the second reference line,
when the first reference line is located higher than the second reference line, convert the first display object to a first indicator based on the first reference line and display the same, and
in response to a fourth interaction input for the first indicator, display the first pop-up window corresponding to the first display object based on the first coordinate information.

5. The electronic device of claim 4, wherein the instructions, when executed by the processor, cause the electronic device to adjust a location of the second display object such that an upper boundary line of the second display object is displayed adjacent to the bottom surface of the first indicator.

6. The electronic device of claim 4, wherein the instructions, when executed by the processor, cause the electronic device to,
when the first reference line is located lower than the second reference line, determine a lower boundary line for the first display object as a third reference line,
convert the first display object to the first indicator based on the third reference line and display the same, and
adjust a location of the second display object such that a lower boundary line of the second display object is displayed adjacent to the top surface of the first indicator.

7. The electronic device of claims 1 to 6, wherein the instructions, when executed by the processor, cause the electronic device to,
identify a multi-touch input for an integrated object that includes the first indicator and the second display object,
in response to the multi-touch input, identify the first pop-up window corresponding to the first indicator and the second pop-up window corresponding to the second display object,
display the identified first pop-up window based on the first coordinate information, and
display the identified second pop-up window based on the second coordinate information.

8. The electronic device of claim 7, wherein the instructions, when executed by the processor, cause the electronic device to hierarchically display the second pop-up window corresponding to the second display object to be placed relatively higher than the first pop-up window corresponding to the first indicator.

9. A method of managing a pop-up window, the method comprising:
in response to a first interaction input for a first pop-up window, acquiring first coordinate information of the first pop-up window;
in response to termination of the first interaction input, determining a first edge line of the first pop-up window as a first reference line;
based on the first reference line and a first point at which the first interaction input is terminated, displaying a first display object corresponding to the first pop-up window; and
in response to a second interaction input for the first display object, displaying the first pop-up window corresponding to the first display object based on the first coordinate information.

10. The method of claim 9, wherein the displaying of the first display object comprises:
generating the first display object by adjusting the first pop-up window to a preset size; and
displaying the generated first display object based on the first reference line and the first point.

11. The method of claims 9 to 10, further comprising:
when the first display object is displayed, maintaining a state in which an application program of the first pop-up window corresponding to the first display object is in execution; and
when the first display object is displayed, adjusting at least one of brightness, illuminance, and saturation of the first display object.

12. The method of claim 9, further comprising:
in a state in which the first display object is being displayed, determining an upper boundary line for the first display object as the first reference line;
in response to a third interaction input for a second pop-up window, acquiring second coordinate information of the second pop-up window;
in response to termination of the third interaction input, determining an upper boundary line for the second pop-up window as a second reference line;
generating a second display object based on the second pop-up window;
when a second point at which the third interaction input is terminated and the first point at which the first interaction input is terminated are included in a first edge region of a display, identifying relative locations of the first reference line and the second reference line;
when the first reference line is located higher than the second reference line, converting the first display object to a first indicator based on the first reference line and displaying the same; and
in response to a fourth interaction input for the first indicator, displaying the first pop-up window corresponding to the first display object based on the first coordinate information.

13. The method of claim 12, further comprising:
adjusting a location of the second display object such that an upper boundary line of the second display object is displayed adjacent to the bottom surface of the first indicator.

14. The method of claim 12, further comprising:
when the first reference line is located lower than the second reference line, determining a lower boundary line for the first display object as a third reference line;
converting the first display object to the first indicator based on the third reference line and displaying the same; and
adjusting a location of the second display object such that a lower boundary line of the second display object is displayed adjacent to the top surface of the first indicator.

15. The method of claims 11 to 14, further comprising:
identifying a multi-touch input for an integrated object that includes the first indicator and the second display object;
in response to the multi-touch input, identifying the first pop-up window corresponding to the first indicator and the second pop-up window corresponding to the second display object;
displaying the identified first pop-up window based on the first coordinate information; and
displaying the identified second pop-up window based on the second coordinate information.
